# DEMANDE DE BREVET EUROPEEN

(11) **EP 0 842 808 A1**
(43) Date de publication de la demande: **20.05.1998**
(21) Numéro de dépôt: 97402697.3
(22) Date de dépôt: 12.11.1997
(51) Int. Cl.: B60N 2/08

(54) **Glissière verrouillable instantanément pour un siège de véhicule**

(30) Priorité: 14.11.1996 FR 9613880
(71) Demandeur: BERTRAND FAURE EQUIPEMENTS S.A., 92100 Boulogne (FR)
(72) Inventeur: Rohee, René, 61100 Flers (FR)
(74) Mandataire: Burbaud, Eric

(57) **Abrégé**

La glissière comprend un premier et un deuxième profilés (3,4) coulissant l'un par rapport à l'autre, et un mécanisme (15) de blocage longitudinal du siège qui comporte quatre lames (16 à 19) élastiquement flexibles comportant chacune des dents (28) adaptées pour coopérer, dans une position de verrouillage, avec des crans (20) réalisés sur le deuxième profilé. Le premier profilé comporte des moyens de déverrouillage (23) adaptés pour agir simultanément sur les quatre lames, en les faisant fléchir élastiquement, de manière que les dents de toutes les lames soient dégagées hors des crans. Les lames sont disposées les unes par rapport aux autres de sorte que, dans la plupart des positions relatives du premier profilé par rapport au deuxième profilé, au moins l'une des lames engrène avec les crans.

## Description

La présente invention est relative à une glissière verrouillable en position, notamment pour siège de véhicule automobile. Une telle glissière est en particulier destinée à être montée sous un siège avant de véhicule automobile et à être fixée au plancher de ce véhicule pour permettre le réglage en position longitudinale du siège puis l'immobilisation de ce siège quelle que soit la position du réglage choisie.

Généralement, une glissière comporte un premier profilé et un deuxième profilé coulissants longitudinalement l'un dans l'autre. La glissière comporte en outre un mécanisme de blocage longitudinal du premier profilé sur le deuxième profilé en une pluralité de positions de verrouillage.

D'après le document FR-A-2 395 858, on connaît un mécanisme de blocage qui comprend au moins deux lames destinées à engrener indépendamment l'une de l'autre, dans l'une desdites positions de verrouillage, avec des crans ayant une certaine largeur et régulièrement répartis le long d'au moins un rail solidarisé avec le deuxième profilé, lesdites lames étant dégageables ensemble desdits crans par des moyens de déverrouillage.

Or, même si ce mécanisme de blocage permet d'assurer une immobilisation efficace du premier profilé sur le deuxième profilé, l'engrènement et le déverrouillage de chacune des lames dans et hors des crans sont obtenus sous l'action de moyens de verrouillage et de déverrouillage utilisant un grand nombre de pièces.

L'invention a pour but de remédier aux inconvénients mentionnés ci-dessus et vise plus particulièrement à fournir un mécanisme de blocage simple tout en assurant une immobilisation positive du premier profilé sur le deuxième profilé et ce, avec un pas de verrouillage réduit.

A cet effet, selon l'invention, une glissière du type précité est essentiellement caractérisée en ce que le premier profilé et le deuxième profilé sont respectivement de section en forme de "U" présentant une âme et deux ailes, les deux formes en "U" étant inversées l'une par rapport à l'autre pour définir un volume intérieur, ledit premier profilé coulissant longitudinalement entre lesdites ailes du deuxième profilé,
en ce que lesdites au moins deux lames comprennent chacune :
- une première partie d'extrémité fixée sur le premier profilé, dans ledit volume intérieur, et
- une partie courante munie de dents de verrouillage ayant une largeur sensiblement égale à celle des crans,
en ce que lesdites au moins deux lames sont disposées l'une par rapport à l'autre pour garantir, dans la plupart des positions relatives du premier profilé par rapport au deuxième profilé, un engrènement d'au moins l'une desdites lames avec les crans dudit au moins un rail,
en ce que lesdites lames sont élastiquement flexibles en direction de l'une des deux âmes desdits profilés, et en ce que les moyens de déverrouillage sont portés par le premier profilé et font fléchir élastiquement lesdites au moins deux lames, pour désengager lesdites dents de verrouillage desdits crans.

Ainsi, la glissière selon la présente invention possède un mécanisme de blocage qui permet d'assurer un verrouillage positif de ladite glissière dans quasiment n'importe quelle position longitudinale choisie par l'utilisateur grâce à un pas de verrouillage des lames très inférieur au pas des crans dudit au moins un rail.

La glissière suivant l'invention peut éventuellement comporter en outre une ou plusieurs des caractéristiques suivantes :
- les dents de verrouillage portées par chaque lame sont décalées, d'une lame par rapport à l'autre et selon la direction longitudinale de coulissement, d'une distance égale à K x p + p/n, "K" étant un nombre entier, "p" le pas des crans et "n" le nombre de lames ;
- lesdites lames possèdent respectivement une deuxième partie d'extrémité qui traverse une fenêtre longitudinale ménagée dans le premier profilé et qui est destinée à coopérer avec les moyens de déverrouillage ;
- au moins deux lames sont montées tête-bêche, chaque lame coopérant, en position de verrouillage, avec une série de crans régulièrement répartis sur le deuxième profilé ;
- lesdites au moins deux lames sont montées côte à côte et sont orientées dans un même sens longitudinal, chaque lame coopérant, en position de verrouillage, avec une série de crans régulièrement répartis sur le deuxième profilé ;
- le mécanisme de blocage comprend deux paires de lames montées tête-bêche, chaque paire de lames étant formée à partir d'une tôle longitudinalement fendue depuis la deuxième partie d'extrémité jusque dans la première partie d'extrémité, pour former quatre lames flexibles indépendantes les unes des autres et coopérant chacune avec une série de crans ;
- les moyens de déverrouillage comprennent un bras coudé monté pivotant sur le premier profilé entre une position de déverrouillage dans laquelle ledit bras appuie simultanément sur chacune des deuxièmes parties d'extrémité des lames pour désengager lesdites dents de verrouillage desdits crans, et une position de verrouillage des lames vers laquelle ledit bras est rappelé par des moyens élastiques et dans laquelle il ne coopère pas avec les lames ;
- les crans possèdent des chanfreins destinés à faciliter l'engrènement de l'une desdites au moins deux lames et possédant une valeur adaptée pour qu'en position de verrouillage, une seule lame engrène avec les crans ; et
- la glissière est placée dans un profilé de renfort immobilisé sur le premier profilé en englobant partiellement le deuxième profilé et qui possède une ouverture ménagée en regard de la fenêtre du premier profilé.

Un exemple de réalisation de l'invention va maintenant être décrit en regard des dessins annexés, sur lesquels :
- la figure 1 est une vue de côté d'un siège de véhicule automobile porté par deux glissières selon la présente invention (une seule glissière ayant été représentée) ;
- la figure 2 est une vue de dessus de la glissière selon la présente invention ;
- la figure 3 est une vue en coupe selon la ligne III-III de la figure 2 ;
- la figure 4 est une vue partielle en coupe selon la ligne IV-IV de la figure 3, illustrant une position de verrouillage de la glissière ;
- les figures 5 et 6 sont des vues en coupe longitudinale de la glissière de la figure 2, respectivement en position de verrouillage et de déverrouillage ;
- les figures 7 et 8 sont des vues partielles en coupe des lames de la glissière de la figure 2, respectivement en position de verrouillage et de déverrouillage ; et
- la figure 9 est une variante de la glissière représentée à la figure 3.

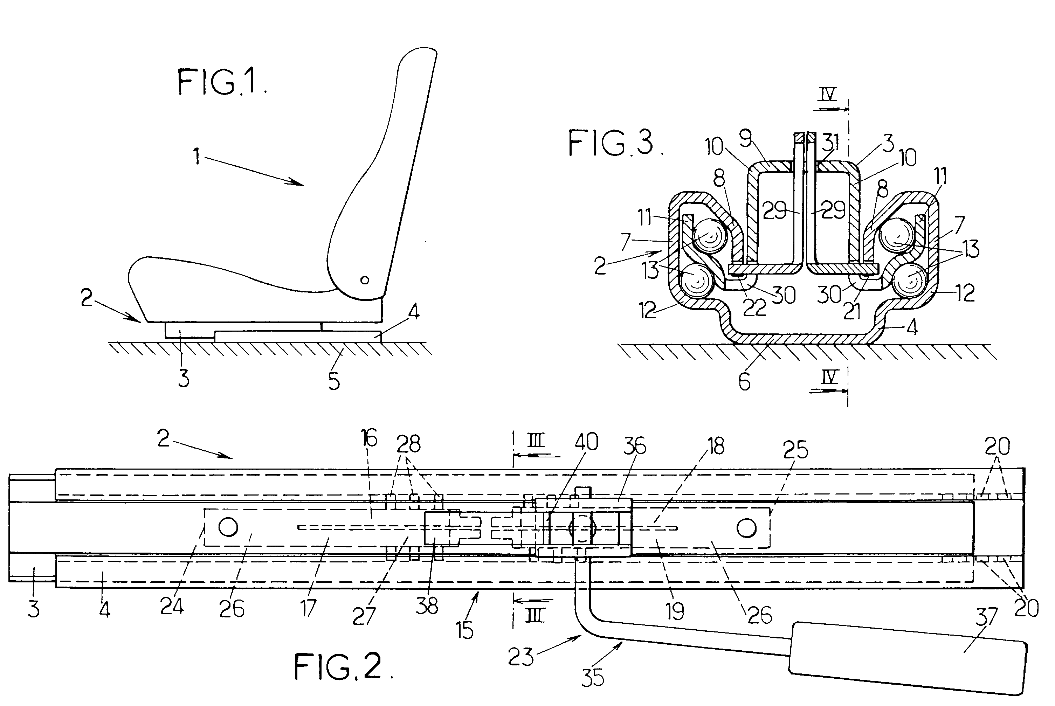

Un siège 1 pour véhicule automobile et plus particulièrement un siège avant, est représenté à la figure 1. Ce siège avant coulisse sur un système de deux glissières 2 parallèles, une seule de ces deux glissières identiques étant représentée aux figures.

La glissière 2 représentée aux figures 1 à 6 est constituée d'un premier profilé ou profilé mâle 3 coulissant dans un deuxième profilé ou profilé femelle 4. Le profilé mâle 3 est destiné à être fixé sur l'armature, non représentée, du siège 1, et le profilé femelle 4 est destiné à être fixé sur le plancher 5 du véhicule automobile.

Le profilé femelle 4 est de section de forme générale en "U" ouvert vers le haut, comportant une âme 6 et deux ailes 7 repliées l'une vers l'autre et se terminant par un retour 8 en forme de crochet tourné vers l'intérieur du profilé et vers le bas.

Le profilé mâle 3 est également de section de forme générale en "U" ouvert vers le bas, de sorte que les deux profilés sont inversés pour définir un volume intérieur. Le profilé mâle 3 possède une âme 9 et deux ailes 10 qui se prolongent, vers l'extérieur et vers le haut, par un retour 11 qui s'engage sous le retour 8 en forme de crochet du profilé femelle 4. Les ailes 7 et l'âme 6 du profilé femelle forment des angles intérieurs arrondis 12 qui définissent, en combinaison avec les retours d'ailes 8 du profilé femelle et les retours d'ailes 11 du profilé mâle des chemins de roulement pour des billes 13 qui y sont interposées, pour assurer un coulissement aisé du profilé mâle 3 dans le profilé femelle 4.

La glissière 2 possède en outre un mécanisme 15 de blocage longitudinal du profilé mâle 3 sur le profilé femelle 4 en une pluralité de positions de verrouillage, qui va maintenant être décrit en regard des figures 2 à 8.

Le mécanisme de blocage 15 comprend quatre lames 16 à 19 destinées à engrener indépendamment l'une de l'autre, dans l'une des positions de verrouillage, avec des crans 20 régulièrement répartis, selon un pas prédéterminé p, le long de deux rails 21 et 22 venus de matière ou solidarisés avec le profilé femelle 4, lesdites lames 16 à 19 étant dégageables ensemble desdits crans 20 par des moyens de déverrouillage 23 portés par le profilé mâle 3.

Chacune des lames 16 à 19 est une lame flexible disposée longitudinalement à l'intérieur de la glissière 2. Les lames 16 et 17 d'une part et les lames 18 et 19 d'autre part, sont réalisées à partir de deux tôles 24 et 25 réalisées en acier à ressort et fendues longitudinalement sur une partie de leur longueur.

Chaque lame 16 à 19 comprend une première partie d'extrémité 26 solidarisée au profilé mâle 3, dans le volume intérieur, en étant par exemple fixée par des rivets sur l'âme 9 de ce profilé et s'étend en biais vers le bas, c'est-à-dire en direction de l'âme 6 du profilé femelle 4. Une partie courante 27 de ces lames s'étendant sensiblement horizontalement est prolongée latéralement par des dents de verrouillage 28. Cette partie courante se termine par une deuxième partie d'extrémité 29 sensiblement perpendiculaire à la direction longitudinale de la glissière 2 et qui traverse le profilé mâle 3 par une fenêtre longitudinale 31 ménagée dans l'âme 9 de ce profilé.

Chacune des lames 16 à 19 ne porte des dents 28 que sur leur bord voisin des retours 8 de la glissière femelle 4. Ces dents 28 s'étendent latéralement au-delà des ailes 10 du profilé mâle 3 en passant dans des fenêtres 30 ménagées à cet effet dans lesdites ailes, et s'engagent dans les crans 20 portés par les rails 21 et 22 venus respectivement de matière avec les retours 8 des ailes 7 du profilé femelle 4. Le cas échéant, les dents 28 peuvent être constituées par une aile horizontale percée de trous qui séparent les dents les unes des autres. En outre, les dents 28 d'une même lame sont régulièrement espacées selon un pas identique au pas p des crans 20.

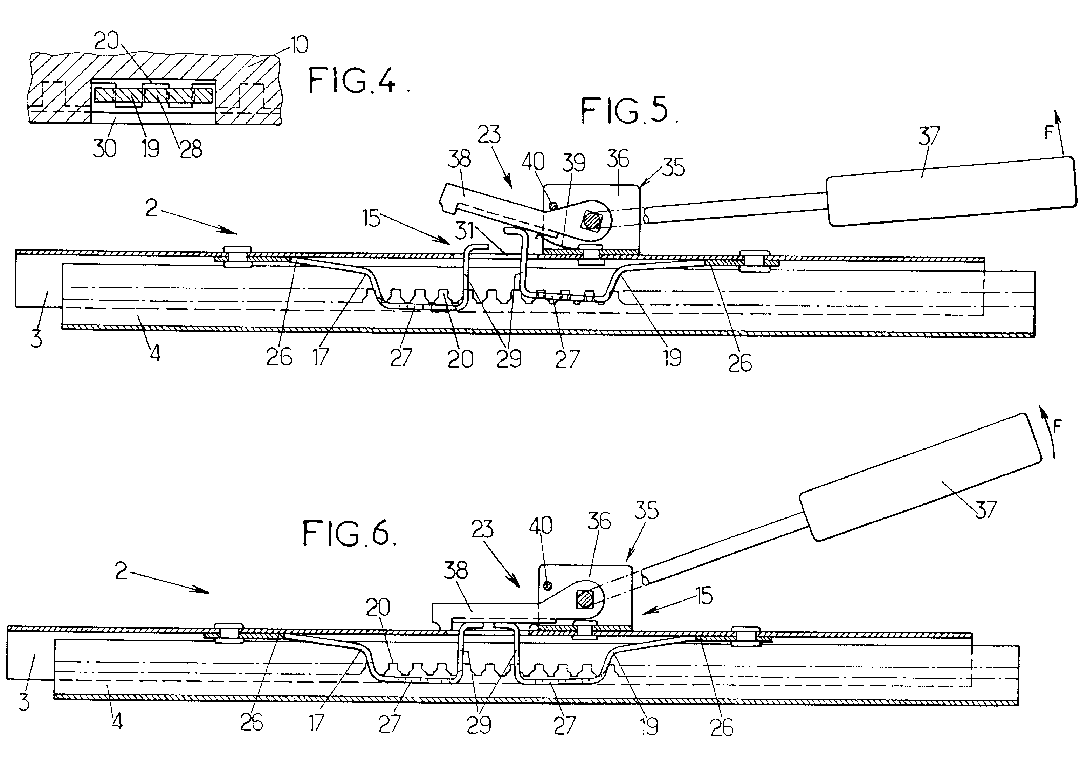

Ainsi, les lames 16 à 19 sont montées deux à deux tête-bêche et possèdent des dents de verrouillage 28 dont la largeur est sensiblement égale à la largeur des crans 20 du profilé femelle 4. Lorsqu'une lame est en position de verrouillage, telle que la lame 19 représentée sur la partie droite de la figure 5, la partie courante 27 de la lame passe dans la fenêtre 30 et les dents 28 s'insèrent dans les crans 20 du profilé femelle 4. Etant donné que les ailes 10 du profilé mâle 3 sont situées pratiquement contre les retours d'ailes 8 du profilé femelle 4, les efforts tendant à faire coulisser le profilé ; mâle 3 dans le profilé femelle 4 se traduisent uniquement par des contraintes de cisaillement dans les dents 28, contraintes auxquelles l'acier constitutif des lames résiste très bien.

Par ailleurs, les deuxièmes parties d'extrémité 29 des lames sont d'une longueur suffisante pour qu'elles dépassent suffisamment, en position de verrouillage, au-dessus de l'âme 9 du profilé mâle 3 et coopèrent avec les moyens de déverrouillage 23 pour faire fléchir élastiquement les lames et les amener en position de déverrouillage représentée à la figure 6 afin que les dents 28 soient dégagées hors des crans 20.

Les moyens de déverrouillage 23 représentés aux figures 2, 5 et 6 comprennent un bras coudé 35 monté pivotant sur une embase 36 elle-même fixée sur le profilé mâle 3. Le bras coudé 35 comprend lui-même une poignée de déverrouillage 37 ainsi qu'une branche 38 formant un angle avec cette poignée 37. La branche 38 est sollicitée vers le haut, c'est-à-dire en direction opposée au profilé mâle 3, par un ressort de rappel 39 qui prend appui sur ledit profilé 3. L'embase 36 porte une butée 40 limitant la rotation vers le haut de la branche 38 et par conséquent la rotation d'ensemble du bras coudé 35.

En agissant sur la poignée de déverrouillage 37 dans le sens de la flèche F représentée aux figures 5 et 6, on fait pivoter la branche 38 du levier coudé 35 en direction du profilé mâle 3 pour venir appuyer sur l'ensemble des deuxièmes parties d'extrémité 29 des lames 16 à 19 et ainsi faire fléchir vers le bas lesdites lames. Ceci provoque le désengagement des dents 28 hors des crans 20 et libère le profilé mâle 3 par rapport au profilé femelle 4. L'utilisateur a alors la possibilité de régler longitudinalement la position du siège.

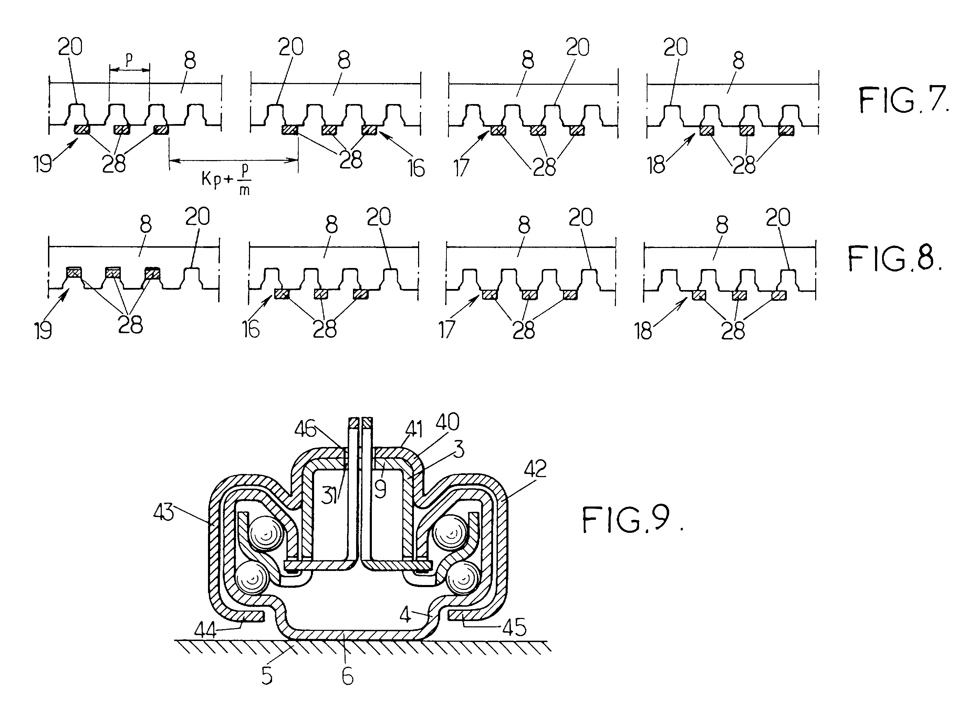

Par ailleurs, les quatre lames 16 à 19 possèdent chacune un ensemble de dents 28 décalés les uns par rapport aux autres pour obtenir un pas de verrouillage inférieur au pas p des crans, comme cela est représenté aux figures 2, 7 et 8. De gauche à droite sur les figures 7 et 8 ont été représentées les dents 28 respectivement des lames 19, 16, 17 et 18 coopérant avec les ailes 8 du profilé femelle 4.

Les dents de verrouillage 28 portées par chaque lame sont décalées, d'une lame par rapport à l'autre et selon la direction longitudinale de coulissement, d'une distance égale à K x p + p/n, "K" étant un nombre entier et "n" étant le nombre de lames.

Ainsi, lorsque les dents de l'une des lames, par exemple la lame 19 comme cela est représenté aux figures 4, 5 et 8, engrènent avec les crans 20 du retour 8 du profilé femelle 4, les dents 28 des trois autres lames 16 à 18 sont situées dans une position intermédiaire entre les crans 20 de sorte qu'aucune de ces trois lames n'engrène avec les crans et restent déverrouillées.

Ainsi, dans le cas présent où il est utilisé quatre lames flexibles, on comprend aisément que le pas de verrouillage est égal à p/4 alors que le pas des crans est de P.

De plus, chacun des crans 20 est chanfreiné pour faciliter la mise en prise des dents 28 dans les crans 20. La valeur des chanfreins des crans 20 est telle que, lorsqu'aucune des quatre lames n'engrène, la zone de recouvrement des dents de la lame destinée à engrener après un déplacement du siège, avec les crans, est minimale.

Lorsque l'utilisateur a mal verrouillé son siège, c'est-à-dire qu'il relâche la poignée 37 lorsque le siège est placé selon une position longitudinale dans laquelle aucune des lames 16 à 19 ne peut engrener avec les crans 20 (figure 7), il suffit de provoquer un déplacement du siège égal à une valeur bien inférieure au quart du pas des crans pour que l'une des quatre lames puisse engrener avec les crans et ainsi immobiliser le siège.

La disposition particulière des ensembles de dents pour chaque lame permet donc de multiplier le nombre de positions longitudinales du siège en s'assurant que le profilé ; mâle est verrouillé sans jeu sur le profilé femelle. Ceci permet de minimiser les efforts engendrés dans les dents de verrouillage lors d'un freinage énergique du véhicule automobile. Cette disposition est encore plus intéressante lorsque la ceinture de sécurité du siège (non représentée) a au moins un de ses trois points d'attache fixé sur le siège.

Enfin, dans la variante représentée à la figure 9, la glissière 2 est placée dans un profilé de renfort 40. Ce profilé possède une forme en "U", ayant une âme 41 fixée sur l'âme 9 du profilé mâle 3, deux ailes 42, 43 s'étendant de part et d'autre du profilé femelle 4 et vers le bas ainsi que deux rabats 44, 45 engagés partiellement sous l'âme 6 du profilé femelle 4. Dans l'âme 41 du profilé de renfort 40 est ménagée une ouverture longitudinale 46 en regard de la fenêtre 31 du profilé mâle 3. Ce profilé 40 améliore encore la résistance de la glissière 2 et est particulièrement intéressant dans le cas où la ceinture de sécurité est directement fixée au siège.

## Revendications

1. Glissière, notamment pour siège (1) de véhicule automobile, comportant un premier profilé (3) et un deuxième profilé (4) coulissants l'un par rapport à l'autre dans une direction longitudinale et un mécanisme (15) de blocage longitudinal du premier profilé (3) sur le deuxième profilé (4) en une pluralité de positions de verrouillage, ledit mécanisme (15) de blocage comprenant au moins deux lames (16 à 19) destinées à engrener indépendamment l'une de l'autre, dans l'une desdites positions de verrouillage, avec des crans (20) ayant une certaine largeur et régulièrement répartis le long d'au moins un rail (21,22) solidarisé avec le deuxième profilé ; (4), lesdites lames (16 à 19) étant dégageables ensemble desdits crans (20) par des moyens de déverrouillage (23), caractérisée en ce que le premier profilé (3) et le deuxième profilé (4) sont respectivement de section en forme de "U" présentant une âme (6,9) et deux ailes (7,10), les deux formes en "U" étant inversées l'une par rapport à l'autre pour définir un volume intérieur, ledit premier profilé (3) coulissant longitudinalement entre lesdites ailes (7) du deuxième profilé (4),
en ce que lesdites au moins deux lames (16 à 19) comprennent chacune :
- une première partie d'extrémité (26) fixée sur le premier profilé (3), dans ledit volume intérieur, et
- une partie courante (27) munie de dents de verrouillage (28) ayant une largeur sensiblement égale à celle des crans (20),
en ce que lesdites au moins deux lames (16 à 19) sont disposées l'une par rapport à l'autre pour garantir, dans la plupart des positions relatives du premier profilé (3) par rapport au deuxième profilé ; (4), un engrènement d'au moins l'une (19) desdites lames (16 à 19) avec les crans (20) dudit au moins un rail (21,22),
en ce que lesdites lames (16 à 19) sont élastiquement flexibles en direction de l'une des deux âmes (6,9) desdits profilés (3,4),
et en ce que les moyens de déverrouillage (23) sont solidarisés avec le premier profilé (3) et font fléchir élastiquement lesdites au moins deux lames (16 à 19), pour désengager lesdites dents de verrouillage (28) desdits crans (20).

2. Glissière selon la revendication 1, dans laquelle les dents de verrouillage (28) portées par chaque lame (16 à 19) sont décalées, d'une lame par rapport à l'autre et selon la direction longitudinale de coulissement, d'une distance égale à K x p + p/n, "K" étant un nombre entier, "p" le pas des crans et "n" le nombre de lames.

3. Glissière selon la revendication 1 ou 2, dans laquelle lesdites lames (16 à 19) possèdent respectivement une deuxième partie d'extrémité (29) qui traverse une fenêtre longitudinale (31) ménagée dans le premier profilé (3) et qui est destinée à coopérer avec les moyens de déverrouillage (23).

4. Glissière selon l'une quelconque des revendications 1 à 3, dans laquelle lesdites au moins deux lames (16 à 19) sont montées tête-bêche, chaque lame (16 à 19) coopérant, en position de verrouillage, avec une série de crans (20) régulièrement répartis sur le deuxième profilé (4).

5. Glissière selon l'une quelconque des revendications 1 à 3, dans laquelle lesdites au moins deux lames (16 à 19) sont montées côte à côte et sont orientées dans un même sens longitudinal, chaque lame coopérant, en position de verrouillage, avec une série de crans (20) régulièrement répartis sur le deuxième profilé (4).

6. Glissière selon l'une quelconque des revendications 1 à 3, dans laquelle le mécanisme de blocage comprend deux paires (16,17,18,19) de lames montées tête-bêche, chaque paire de lames étant formée à partir d'une tôle (24,25) longitudinalement fendue depuis la deuxième partie d'extrémité (29) jusque dans la première partie d'extrémité (26), pour former quatre lames (16 à 19) flexibles indépendantes les unes des autres et coopérant chacune avec une série de crans (20).

7. Glissière selon l'une quelconque des revendications 3 à 6 dans laquelle les moyens de déverrouillage (23) comprennent un bras coudé (35) monté pivotant sur le premier profilé (3) entre une position de déverrouillage dans laquelle ledit bras (35) appuie simultanément sur chacune des deuxièmes parties d'extrémité (29) des lames (16 à 19) pour désengager lesdites dents de verrouillage (28) desdits crans (20), et une position de verrouillage des lames (16 à 19) vers laquelle ledit bras (35) est rappelé par des moyens élastiques (39) et dans laquelle il ne coopère pas avec les lames.

8. Glissière selon l'une quelconque des revendications 1 à 7, caractérisée en ce que les crans (20) possèdent des chanfreins destinés à faciliter l'engrènement de l'une desdites au moins deux lames (16 à 19) et possédant une valeur adaptée pour qu'en position de verrouillage, une seule lame engrène avec les crans (20).

9. Glissière selon l'une quelconque des revendications 3 à 8, dans laquelle la glissière (2) est placée dans un profilé de renfort (40) immobilisé sur le premier profilé (3) en englobant partiellement le deuxième profilé ; (4) et qui possède une ouverture (46) ménagée en regard de la fenêtre (31) du premier profilé (3).
